Europäisches Patentamt

European Patent Office

Office européen des brevets

(19)

(11) Veröffentlichungsnummer : **0 362 307 B1**

(12) **EUROPÄISCHE PATENTSCHRIFT**

(45) Veröffentlichungstag der Patentschrift :
**09.12.92 Patentblatt 92/50**

(21) Anmeldenummer : **89902017.6**

(22) Anmeldetag : **17.02.89**

(86) Internationale Anmeldenummer :
**PCT/CH89/00029**

(87) Internationale Veröffentlichungsnummer :
**WO 89/07753 24.08.89 Gazette 89/20**

(51) Int. Cl.⁵ : **G01K 11/22**, G01N 29/02,
G01N 25/48, G01N 29/18

(54) **ULTRASCHALL-TEMPERATURMESSUNG UND ANWENDUNGEN IN DER OPTISCHEN SPEKTROSKOPIE UND DER KALORIMETRIE.**

Die Akte enthält technische Angaben, die nach dem Eingang der Anmeldung eingereicht wurden und die nicht in dieser Patentschrift enthalten sind.

(30) Priorität : **19.02.88 CH 624/88**
**13.02.89 CH 491/89**

(43) Veröffentlichungstag der Anmeldung :
**11.04.90 Patentblatt 90/15**

(45) Bekanntmachung des Hinweises auf die Patenterteilung :
**09.12.92 Patentblatt 92/50**

(84) Benannte Vertragsstaaten :
**AT BE CH DE FR GB IT LI LU NL SE**

(56) Entgegenhaltungen :
**DE-A- 3 108 756**
**FR-A- 2 278 073**

(56) Entgegenhaltungen :
**US-A- 3 667 297**
**US-A- 4 683 750**
**JOURNAL OF CHROMATOGRAPHIC SCIENCE, Band 7, Nr. 4, April 1967; H.W. GRICE et al.: "Performance and Applications of anultrasonic detector for gas chromatography", Seiten 239-240**
**REV. SCI. INSTRUM., Band 45, Nr. 3, März 1974, The American Institute of Physics (US); K. EBELING et al.: "Microcalorimeterfor measuring heat of straining or destraining of sheetlike materials", Seiten 419-426**

(73) Patentinhaber : **OEHLER, Oscar, Dr.**
**Streulistrasse 24**
**CH-8032 Zürich (CH)**

(72) Erfinder : **OEHLER, Oscar**
**Streulistrasse 24**
**CH-8032 Zürich (CH)**
Erfinder : **MELCHIOR, Hans**
**Freudenbergstrasse 101 F1**
**CH-8044 Zürich (CH)**

EP 0 362 307 B1

## Beschreibung

Die Erfindung betrifft ein Verfahren und eine Vorrichtung zur Messung kleiner Temperaturveränderungen in einem Gas, sowie deren Anwendungen in der optischen Spektroskopie und der Kalorimetrie.

Es existiert eine sehr grosse Anzahl von verschiedenen Temperaturmessmethoden. Beispielsweise lassen sich Temperaturen über die Wärmeausdehnung (Flüssigkeitsthermometer, Bimetall-Dehnungsstreifen), über die Temperaturabhängigkeit des elektrischen Widerstandes (Widerstandsthermometer) oder über die Thermospannung an der Schnittstelle verschiedener Metalle (Thermoelement) messen. Weitere Methoden beruhen auf der Abstrahlung elektromagnetischer Strahlung (Infrarot-Radiometer, Pyrometer). Diese Messmethoden eignen sich sehr gut zur Temperaturbestimmung bei Festkörpern und Flüssigkeiten.

Gastemperaturen werden in der Regel - abgesehen von der im Gasthermometer realisierten Gasausdehnungsmessung - indirekt gemessen, indem das Gas mit einem Festkörper- oder Flüssigkeits-Thermometer in Kontakt gebracht wird. Wegen der schlechten Wärmeleitfähigkeit von Gasen und der niedrigen Wärmeenergieübertragung vom Gas auf das Thermometer sind solche Temperaturmessungen relativ träge.

Aufgrund des idealen Gasgesetzes lässt sich die Temperatur eines eingeschlossen Gases über dessen Druck ermitteln. Die Druckschwankungen, welche bei einer periodischen Gastemperaturänderung auftreten, lassen sich beispielsweise hochempfindlich mittels eines Mikrophons erfassen. Allerdings sind die auftretenden Temperaturänderungen wegen der erwähnten niedrigen Wärmeleitfähigkeit von Gasen in der Regel sehr klein, so dass das Mikrophon bei tieferer Frequenz, im SubHz-Bereich, betrieben werden müsste. Mikrophone sind für solche Frequenzen oder gar statische Messungen nicht sehr geeignet. Es ist daher von Interesse, nach einem Verfahren zu suchen, das eine direkte und quasistatische Messung der Gastemperatur erlaubt.

Es sind verschiedene Anwendungen denkbar, in denen es erwünscht ist, kleine Tenmperaturveränderungen in einem Gas zu messen.

Beispielsweise ist es in der optischen Gasspektroskopie von Interesse, die Wechselwirkung des Strahlungsfeldes mit einem Gas zu untersuchen. Ausgehend von einer periodischen Licht-, insbesondere Infrarot-Einstrahlung, treten im Gas periodische Temperaturschwankungen auf.

An sich existieren verschiedene Vorrichtungen zur Messung der absorbierten Lichtleistung in einem Gas. Die grösste Bedeutung haben Festkörper-Strahlungssensoren, die auf dem Photoeffekt beruhen. Unter Verwendung solcher Sensoren wird meistens von der sog. Extinktionsmethode Gebrauch gemacht: Die Absorption des Messgutes wird aus dem Vergleich zweier Strahlen ermittelt, wobei der eine das Messgut durchdringt, der andere ungehindert zum Detektor gelangt. Im Gegensatz zu dieser indirekten Methode wird oft einer direkten Methode den Vorzug gegeben. Diese besteht darin, direkt das lichtabsorptions-bedingte Signal zu messen. Sehr gut bewährt hat sich in diesem Zusammenhang, wie bereits erwähnt, die Messung der Druckschwankungen, die sich bei der Absorption von intensitätsmoduliertem Licht in einer verschlossenen Zelle aufbaut. Dieser sog. photoakustische Effekt zeichnet sich durch eine sehr hohe Empfindlichkeit aus. Da die Messung mit Hilfe eines Mikrophons erfolgt, sind akustische Störungen der Messung nicht zu verhindern. In vielen Fällen ist diese akustische Störbarkeit nicht tolerierbar.

Eine andere Anwendungsmöglichkeit einer direkten Gastemperaturmessmethode bietet die Kalorimetrie.

Kalorimetrische Untersuchungen werden im klassischen Kalorimeter in wässriger Umgebung durchgeführt. Das Messgut wird entweder direkt in das Wasser gebracht, oder es ist in einem verschlossenen Gefäss in das Kalorimeterwasser eingetaucht. Letzteres befindet sich in einem von der Umgebung thermisch möglichst gut abgetrennten Wassertank. Die kalorimetrische Untersuchung beruht auf der Verfolgung der Temperatur dieses Kalorimeterwassers, an welches das Messgut seine, beispielsweise durch eine chemische Reaktion freiwerdende, Wärme abgibt. Es ist dabei zu beachten, dass die Temperaturverteilung innerhalb des Kalorimeters möglichst homogen ist und auch mit derjenigen des Messgutes möglichst gut übereinstimmt. Zu diesem Zweck wird vorteilhaft ein Rührwerk eingesetzt.

Das Wasser ist als Wärmeübertragungsmedium vom Messgut auf das Thermometer gut geeignet: einerseits wegen seiner guten Wärmeleitfähigkeit und andererseits wegen der raschen Erreichbarkeit einer homogenen Temperaturverteilung durch Rühren. In vielen Fällen ist es aber umständlich, oder gar unmöglich den Reaktor im Wasserbad eines Kalorimeters unterzubringen. Aus diesem Grunde werden kalorimetrische Messungen oft in gasförmiger Umgebung (beispielsweise in Luft) oder gar im Vakuum durchgeführt, wobei das Messgut auf einer mit Temperatursensoren versehenen Unterlage, in Form eines Tellers oder eines Tiegels, plaziert wird. Es sei das Differential-Kalorimeter erwähnt.

Beim Gaskalorimeter stellen sich zwei Probleme: Einerseits ist für einen guten thermischen Kontakt zwischen dem Messgut und der Unterlage zu sorgen, andererseits muss der Kalorimeterraum von der Umgebung möglichst gut thermisch isoliert sein.

Der konstruktive Aufbau eines Gaskalorimeters, wie es beispielsweise zur Bestimmung von Schmelz- und Reaktions-Wärmen eingesetzt wird, sei am Beispiel eines Differential-Kalorimeters beschrieben:

In einem Hohlraum sind auf einem Teller zwei Tiegel angeordnet. Im einen befindet sich das reakionsfähige, feste oder flüssige Messgut und im anderen ein inertes Referenzgut. Ein Thermoelement steht mit den beiden Tiegeln in thermischem Kontakt. Um beispielsweise das Kalorimeter bei erhöhter konstanter Temperatur zu betreiben, oder eine lineare Temperaturrampe fahren zu können (Differential Scanning Calorimeter), ist der Kalorimeter-Hohlraum beheizbar und zur Abschirmung äusserer Wärmequellen gegebenenfalls mit einer Wärmeisolationsschicht umgeben.

Falls im Messgut - beispielsweise während des Aufheizvorganges - eine thermisch ausgelöste Reaktion stattfindet, tritt im Thermoelement an der Messgut-Kontaktstelle gegenüber derjenigen beim Referenzgut eine Thermospannung auf, die Auskunft über die relative Erwärmung des Messgutes gibt.

Oft ist es überhaupt nicht möglich, Messungen in einer wässrigen Umgebung durchzuführen, oder das Messgut mit einer festen, die Temperatursensoren enthaltenden, Unterlage in guten thermischen Kontakt zu bringen. Ebenso ist es oft unmöglich, das Messgut vollständig in einem thermisch von der Umgebung abgetrennten Volumen unterzubringen.

Beispielsweise ist es in der integrierten Optik von Interesse, die optischen Verluste, die durch Lichtabsorption im Wellenleiter bedingt sind, zu bestimmen. Eine solche Untersuchung kann niemals in wässriger Umgebung realisiert werden, da der Brechungsindex des Wassers die Lichtführungs- und Kopplungs-Bedingungen ändern und damit die Messung verfälschen würde. Ebenso ist es kaum möglich, das optoelektronische Element im Kalorimeterraum eines herkömmlichen Gaskalorimeters zu betreiben, da innerhalb desselben kein Platz für die Lichteinkopplungs- und Lichtauskopplungs-Vorrichtungen vorhanden ist. Es stellt sich damit das Problem, eine kalorimetrische Messung in Luft durchzuführen, wobei das Messgut weder mit einer Unterlage in thermisch guter Verbindung steht, noch thermisch von der Umgebung hinreichend abgetrennt werden kann. Als taugliche Möglichkeit kommt eine indirekte Messung des Wärmeinhaltes des Messgutes über den Wärmeverlust an die Umgebung in Frage.

Eine solche Methode wurde zur Bestimmung der optischen Verluste in Glas angewandt. Sie besteht darin, dass ein Glasstab im optischen Resonator eines leistungsstarken Lasers (P = 115 W) an dünnen Fäden angeordnet wurde und die stationäre, durch die Lichtdurchstrahlung bedingte Temperaturerhöhung $\Delta T$, sowie die Abkühlzeit nach Abschalten des Lasers bestimmt wurden. (T.C.Rich and D.A. Pinnow, Appl. Phys. Lett. 20, 264 (1972). Zur Messung der Temperatur der Glasprobe diente ein feines, an der Probenoberfläche angebrachtes Thermoelement. Die im Glasstab mit einem Radius von r und einer Wärmekapazität C absorbierte Lichtleistung berechnet sich nach:

$$\alpha \ = \ C \ (\pi r^2) \ \Delta T / \tau P \ . \qquad (1)$$

Typischerweise ergab sich für einen Suprasil-Glasstab im optischen Resonator eines 115 W - Lasers eine Temperaturerhöhung von $\Delta T = 0.56 °$ C und beim Abkühlen eine Zeitkonstante von $\tau = 75$ s.

Das Verfahren bedingte, dass zur Unterdrückung einer ungewollten Wärmeabfuhr sehr dünne Thermoelement-Drähte verwendet werden, denn die Wärmeleitung von Metallen ist um ca 4 Grössenordnungen grösser als diejenige der Luft. Weiter wirft der thermische Kontakt zwischen dem thermisch schlecht leitenden Glasstab und der Thermoelement-Messstelle Probleme auf. Allgemein fordert eine thermische Kontaktierung feiner Proben grossen Aufwand - beispielsweise wenn das Thermoelement zur Gewährleistung eines guten thermischen Kontaktes aufgedampft werden muss. Zudem ist eine metallische thermische Verbindung in gewissen Fällen sehr feiner optoelektronischer Komponenten überhaupt nicht realisierbar, wenn beispielsweise die optischen Eigenschaften durch den Temperatursensor gestört würden.

Mit diesen Beispielen aus der optischen Spektroskopie und der Kalorimetrie soll gezeigt werden, dass ein Interesse für eine direkte Messung der Temperatur von Gasen besteht.

Es resultiert daraus die Aufgabenstellung der Erfindung, ein Verfahren anzugeben und eine Vorrichtung zu schaffen, die es erlaubt, Gastemperaturen direkt zu messen und auf die optische Spektroskopie oder die Kalorimertie anzuwenden.

Die Aufgabe wird gelöst durch Messung der temperaturbedingten Verstimmung eines Ultraschallresonators, der durch zwei einander gegenüber angeordnete Ultraschallwandler, der eine als Sender, der andere als Empfänger betrieben, gebildet wird.

Weiterhin wird die Aufgabe dadurch gelöst, dass das erwähnte Temperaturmessverfahren zur Temperaturmessung in der optischen Spektroskopie und der Kalorimetrie angewendet werden, indem die von der Probe an das umgebende Gas abgegebene oder von ihr aufgenommene Wärme über die Aenderungen der Gastemperatur bestimmt wird.

Das physikalische Prinzip der vorgeschlagenen Lösung der Aufgabe beruht auf der Temperaturabhängigkeit der Schallgeschwindigkeit. Dieser Effekt ist recht gross. So ändert sich die Schallgeschwindigkeit in Luft bei einer Temperaturerhöhung von 25° C auf 26° C von 340 m/sec auf 340.6 m/sec, also um 0.6 m/sec C oder um ca 0.5% pro Grad Temperaturänderung.

Die Schallgeschwindigkeit c in einem Gas berechnet sich nach der folgenden Formel:

EP 0 362 307 B1

$$c = \sqrt{\varkappa \cdot p / \varrho}, \quad \text{wo} \quad p: \text{Druck},$$ (2)

$\varkappa = cp/cv$ Verhältnis der spez. Wärmen

$\varrho$: Dichte des Gases

Für ein ideales Gas ergibt sich:

$$c = \sqrt{\varkappa (p_0 / \varrho_0)(1 + \gamma \cdot T)}, \quad \text{wo} \quad \gamma = 1/273.2 \ \text{K}^{-1}$$ (3)

Auffällig ist die verschwindende Druckabhängigkeit der Schallgeschwindigkeit für ein ideales Gas.

Da die thermodynamischen Eigenschaften von Luft bei Zimmertemperatur nicht wesentlich von denjenigen eines idealen Gases abweichen, bedeutet die Messung von Schallgeschwindigkeitsvariationen eine weitgehende druckunabhängige Bestimmung von Gastemperaturänderungen.

Die Schallgeschwindigkeit lässt sich beispielsweise aus der Zeitverzögerung zwischen der Aussendung eines Pulses und der Rückkehr seines Echos ermitteln. Im vorliegenden Fall wäre allerdings der elektronische Aufwand erheblich, denn aufgrund der Temperaturabhängigkeit der Schallgeschwindigkeit würde die Messung einer Temperaturänderung von $\Delta T = 0.$ 1 mK eine Auflösung der Zeitmessung von 5.2 ps erfordern.

Ein anderes Schallgeschwindigkeits-Messverfahren, das von H. Rump in der deutschen Offenlegungsschrift DE 31 08 756 A1 beschrieben worden ist, besteht darin, dass zwei Ultraschallwandler verwendet werden, die einander gegenüber angeordnet sind. Es wurde die Laufzeit von Ultraschallpulsen, die vom einen Wandler ausgehen mittels des zweiten Wandlers gemessen. Aufgrund der Zeitdifferenz kann die Schallgeschwindigkeit des Gases, das sich zwischen den Wandlern befindet, ermittelt werden. Damit konnte bei bekannter Gaszusammensetzung auf die Gastemperatur und bei bekannter Temperatur auf die Zusammensetzung einer Gasmischung geschlossen werden. Zur Erhöhung der Genauigkeit der Schallgeschwindigkeitsmessung wurde vorgeschlagen, zusätzlich zur Laufzeitmessung eine Messung des Schallpegels am Ultraschallempfänger vorzunehmen und die beiden Messungen zur korrelieren.

Eine weitere Möglichkeit zur Analyse einer binären Gasmischung anhand der Messung der Schallgeschwindigkeit ist in der französischen Patentschrift FR-A-2278073 beschrieben. Ein akustischer Resonator in Form eines Hohlraumes wird durch Anblasen einer Kante angeregt. Die Schallgeschwindigkeitsmessung lässt sich aus der Eigenfrequenz dieses Resonators ermitteln. In einem Zweikomponentengemisch bekannter Gase kann auf diese Weise die Konzentration der beiden Bestandteile bestimmt werden. Im allgemeinen Fall einer Mehrkomponenten-Gasmischung liefert die Messung der Schallgeschwindigkeit hingegen keine eindeutige quantitative Aussage.

Sehr genaue Messungen von Schallgeschwindigkeitsänderungen in der Luft über einer ebenen Probe konnten mittels Ultraschallwandlern mit gekrümmter Oberfläche erzielt werden. Mit dem einem Wandler wurde ein Schallsignal auf die Probe fokussiert und mit dem anderen das reflektierte Signal empfangen. Kleine, periodische Temperaturänderungen der Probentemperatur, welche durch Absorption von modulierter Lichtstrahlung erzeugt wurden, konnten über die Erwärmung der Luft über der Probe anhand der Laufzeit von Ultraschallpulsen gemessen werden. Es sei auf die amerikanische Patentschrift Nr. 4,683,750 verwiesen. Es ist festzuhalten, dass das vorgestellte Verfahren voraussetzt, dass die Probe eben ist und ein gutes Schallreflexionsvermögen aufweist; der Anwendungsbereich ist daher die Untersuchung der optischen und thermischen Eigenschaften von Oberflächen.

Ein alternatives Verfahren zur Messung kleiner Schallgeschwindigkeitsänderungen in einem Gas ist Gegenstand der vorliegenden Erfindung. Das Verfahren besteht darin, dass die Temperaturschwankungen in der gas förmigen Umgebung einer wärmeaustauschenden Probe über die Verstimmung eines Ultraschallresonators, der aus zwei einander gegenüber angeordneten Ultraschallwandlern gebildet wird, erfasst werden. Der Vorteil dieses Verfahrens, gegenüber dem vorangehenden besteht darin, dass die Probe kein hohes Schallreflexionsvermögen aufweisen muss - die Probe kann sogar gasförmig sein. Hingegen können mit dem neuen Verfahren nur solche Proben untersucht werden, welche das Ultraschallfeld wenig stören.

Der Anwendungsbereich des Verfahrens ist damit komplementär zu demjenigen, das in der amerikanischen Patentschrift Nr. 4,683,750 besprochen ist: Während letzteres Verfahren zur Erreichung einer hohen Messgenauigkeit die grosse Effizienz der Uebertragung der fokussierten Ultraschalleistung vom Sender über die reflektierende Probe zum Empfänger nutzt, wird in der vorliegenden Erfindung von der hohen Flankensteilheit in der Nähe einer akustischen Resonanz, resp. der grossen Phasenabhängigkeit im Resonanzmaximum, Gebrauch gemacht.

4

Denkbar wäre es auch, einen Sender kontinuierlich in akustischer Resonanz zu betreiben und die Impedanzabhängigkeit desselben zu verfolgen. Man hätte sich dann allerdings mit dem Problem auseinanderzusetzen, eine sehr kleine Veränderung eines grossen Signals zu messen.

Da die vorgeschlagene Ultraschallmessung eine weitgehende druckunabhängige Bestimmung von Gastemperaturänderungen erlaubt, kann bei der optisch-spektroskopischen Anwendung von einer sog. photothermische Messung gesprochen werden - im Gegensatz zur sog. photoakustischen Methode, bei der die Druckschwankungen im Gas bei Bestrahlung mit intensitätsmoduliertem Licht mittels eines Mikrophons bestimmt werden.

Es stellt sich die Frage, inwieweit eine photothermische gegenüber der photoakustischen Messung an Gasen Vorteile bringen kann.

Das Wegfallen der akustischen Störbarkeit ist sicherlich günstig. Eigene Messungen, in denen die photoakustische und die photothermische Methoden miteinander verglichen worden sind, zeigen deutlich den Unterschied der beiden Methoden: Während der photoakustische Effekt verschwindet, wenn bei niedrig-frequentem Betrieb die Zelle nicht vollständig verschlossen ist, konnte beim photothermischen Signal, das mittels Ultraschall gemessenen wurde, keine wesentliche Abhängigkeit vom Oeffnungszustand der Zelle festgestellt werden. Es sei in diesem Zusammenhang auf die folgenden Artikel von O. Oehler, J. Wieland und S. Friedrich hingewiesen: "Measurement of small temperature variations in a gas by ultrasonics", Helv. Phys. Acta, **61**, 885 (1988) und "Ultrasonic device for detection of IR radiation absorbed in a gas", Proc. of the Int. Conf. on Infrared Phys., Zürich 1988.

Damit bringt die photothermische Methode dort gegenüber der photoakustischen Methode Vorteile, wo grosse Druckfluktuationen vorkommen. Es ist allerdings festzuhalten, dass bei verschlossener Zelle die photoakustische Methode eine um ca. einen Faktor 50 höhere Empfindlichkeit aufweist.

Es soll nun auf die andere in der Aufgabenstellung aufgeführte Anwendung, die Kalorimetrie, näher eingegangen werden.

Wie bereits erwähnt, verlangen die klassischen kalorimetrischen Methoden eine gute thermische Kontaktierung des Messguts. Im vorliegenden Fall werden die thermodynamischen Grössen direkt aus dem Temperaturverlauf der Luft, die das Messgut umgibt, ermittelt.

Zur Bestimmung des Wärmeinhaltes des Messgutes ist aber nach Formel (1) auch die Kenntnis der stationären Temperaturerhöhung $\Delta T$ des Messgutes erforderlich. Diese Bestimmung kann durch eine Eichmessung an einer Referenzprobe umgangen werden.

Die Zuverlässigkeit einer solchen Eichung setzt allerdings voraus, dass die Wärmeableitung vom Messgut an die umgebende Luft und diejenige der Referenzprobe an die Umgebung verglichen werden können.

Erschwerend wäre, wenn die Oberflächenbeschaffenheit einen wesentlichen Einfluss auf die Wärmeableitung hätte - wie das etwa bei der Wärmeabstrahlung der Fall ist. Da im vorliegenden Fall aber nur sehr kleine Temperaturerhöhungen $\Delta T$ vorliegen, bei relativ niedriger Temperatur gemessen wird und die Abmessungen der Messzelle klein sind, kann der Strahlungsanteil des Wärmeflusses gegenüber dem Konvektiven Anteil vernachlässigt werden. Das bedeutet aber, dass die Wärmeabgabe in erster Näherung nur von der Geometrie des Messgutes resp. der Referenzprobe abhängt.

Die Ultraschallmethode erlaubt es, dass die Temperatur des Gases, welches das Messgut umgibt, ohne lokale Störungen zu verursachen, etwa durch Zuleitungsdrähte, gemessen werden kann. Es muss lediglich gefordert werden, dass sich die Messprobe und die Referenzprobe in einem vergleichbaren Ultraschallfeld befinden.

Die vorgestellte Methode hat eine Aehnlichkeit mit derjenigen, die zur Messung der optischen Absorption von Thallium-Halogeniden verwendet wurde. In jenem Falle wurden die optischen Verluste photoakustisch bestimmt, indem das Messgut in einen verschlossenen Raum gebracht und die durch Lichtabsorption bedingten Druckänderungen mittels eines Mikrophons gemessen wurden (P. Horn, A.Schmid and P.Bräunlich, Jour. Quantum Electr., **QE 19**, 1169 (1983)). Im Gegensatz zu diesen photoakustischen Messungen erlaubt die Ultraschall-Methode eine lokale Bestimmung von Temperaturdifferenzen, während photoakustisch die gesamte im verschlossenen Hohlraum freiwerdende Wärme gemessen wird. Randeffekte können damit im Fall der Verwendung von Ultraschall besser eliminiert werden. Zusätzlich verlangt die photoakustische Methode eine hohe Dichtigkeit des Kalorimeterraumes - vor allem wenn bei sehr niedriger Frequenz gearbeitet wird. Bei der Ultraschallmethode ist lediglich anzustreben, dass externe Gasströmungen den Kalorimeterraum nicht beeinflussen.

Die Erfindung wird anhand der folgenden Darstellungen beschrieben:

Fig. 1 zeigt eine Uebersichts-Darstellung einer Ultraschallresonator-Vorrichtung zur Messung von Temperaturschwankungen, die durch Lichtabsorption in einem Gas bedingt sind.

Fig. 2 ist eine Darstellung der photothermischen Gasdetektionsvorrichtung mit Modulations- und Filtiermitteln für die einfallende Lichtstrahlung.

Fig. 3 zeigt eine Darstellung des Gaskalorimeters, das auf einem Ultraschallresonator beruht und für ein fluidförmiges Messgut geeignet ist.

Fig. 4 veranschaulicht ein entsprechendes Gaskalorimeter für festes oder flüssiges Messgut.

Fig. 5 zeigt eine Darstellung eines Kalorimeters zur Untersuchung von Lichtleitern und integriert-optischen Elementen.

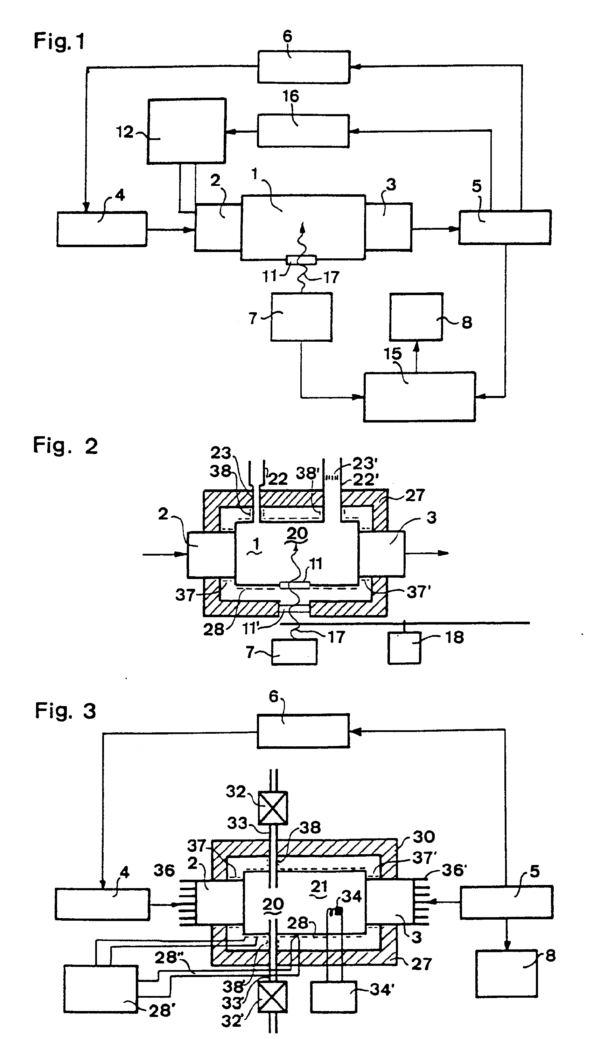

Die Darstellung von Fig. 1 zeigt den Aufbau der bereits erwähnten Ultraschall-Vorrichtung zum Messen von kleinen, durch Absorption von Infrarotstrahlung bedingten Temperaturschwankungen in einem Gas. Die Methode der Gastemperaturmessung beruht auf der grossen Temperaturabhängigkeit der Schallgeschwindigkeit von Gasen. Dieselbe wird mittels eines Ultraschallfeldes, vornehmlich in Form eines akustischen Resonators 1, gemessen. Die akustische Resonanz baut sich zwischen dem Ultraschallwandler-Paar, bestehend aus dem Ultraschall-Sender 2 und dem Ultraschall-Empfänger 3, auf.

Der Ultraschall-Sender 2 wird durch den Generator 4 bei einer Frequenz von typischerweise mehreren hundert kHz angeregt. Das Signal des Generators kann sinusförmig sein oder aus einer regelmässigen Folge von beispielsweise rechteckförmigen Pulsen bestehen. Am Empfänger 3 erscheint ein Signal, dessen Enveloppe (peak-to-peak-Wert), nebst von der Empfindlichkeit des Empfängers 3 und der Schallabsorption im Resonatorraum 1, von der Abstimmung des Resonators 1 abhängt. Das Empfängersignal wird einer Vorrichtung 5 - im folgenden als Analysator bezeichnet - zugeführt. Diese Vorrichtung 5 analysiert entweder die Enveloppe des empfangenen Signals oder sie bestimmt die Phasenlage des Signals bezüglich des Eingangssignals am Sender 2. Diese Analyse des vom Empfänger 3 gelieferten Signals beruht beispielsweise auf einer peak-to-peak-Messung, einer Gleichrichtung mit nachfolgenden Glättung, einer Phasendetektion oder einer phasenempfindlichen Verstärkung mittels eines Lock-in-Verstärkers.

Es ist angezeigt, den Ultraschallresonator durch Wahl der Frequenz und der Länge des Resonators im Fall einer Enveloppenanalyse in einer Resonanzflanke zu betreiben. Bei der Phasendetektion wird der Resonator vorteilhafterweise im Resonanzmaximum, also im Bereich der grössten Phasenänderung, betrieben. Weiterhin ist die Wahl einer möglichst hohen Ultraschall-Frequenz wegen der weitgehenden Proportionalität der Enveloppen-Steigung zur Frequenz empfehlenswert.

Die obere Limite der Ultraschall-Frequenz ist durch das Schallabsorbtionsvermögen des Probegases, das oberhalb von 100 kHz mit zunehmender Frequenz stark ansteigt, gegeben. Es ist allerdings fest-zuhalten, dass die Frequenz höher gewählt werden kann, als dies mit kommerziellen luft-angepassten Ultraschallwandlern möglich ist (50 kHz bis 220 kHz). Im vorliegenden Fall muss nämlich das Schallsignal nicht über eine Distanz von mehreren Metern oder Dezimetern effizient übertragen werden, wie das normalerweise erwünscht ist, sondern lediglich über einen Abstand im Millimeter-Bereich.

Mit dem Betrieb des Ultraschallresonators in einer Resonanzflanke bei der Enveloppenanalyse, oder im Resonanzmaximum bei der Phasendetektion sowie der Wahl einer hohen Frequenz wird erreicht, dass sich eine - beispielsweise temperaturbedingte - Aenderung in der Abstimmung maximal auf das Ausgangssignal des Analysators 5 auswirkt.

Die Aenderung der Resonator-Abstimmung lässt sich nun direkt der Veränderung der Signal-Enveloppe, also dem Quasi-Gleichstrom-Wert resp. der Phasenverschiebung am Analysator 5 entnehmen. Es ist allerdings festzuhalten, dass in beiden Fällen der lineare Temperatur-Messbereich sehr beschränkt ist. Da aber nur kleine Temperaturschwankungen gemessen werden sollen, ist diese Einschränkung nicht gravierend. Allerdings können langsame driftartige Temperaturänderungen ein Abwandern der Resonaturabstimmung und somit eine Aenderung der Temperaturempfindlichkeit bewirken. Es muss daher nach Wegen gesucht werden, grossen Langzeiteffekten wirkungsvoll entgegenzuwirken.

Beispielsweise kann die Ultraschallfrequenz derart nachgeführt werden, dass die Resonator-Abstimmung, das heisst der peak-to-peak-Wert am Empfänger 3, konstant bleibt. Zu diesem Zweck kann beispielsweise das Ausgangssignal des Analysators 5 als Steuer-Signal über einen geeigneten Regler 6 einem spannungsgesteuerten Generator 4 zugeführt werden.

Der überstreichbare Temperatur-Messbereich ist durch den Operationsbereich der Ultraschallwandler gegeben. Typischerweise lassen sich mit Ultraschall-Wandlern 2, 3 Frequenzbereiche von 1% bis 2% der Sollfrequenz überstreichen.

Ein beliebig grosser Temperaturbereich lässt sich hingegen erreichen, wenn der Resonator 1 nicht elektrisch, sondern mittels eines Reglers 16 und einer mechanischen Verschiebe-Vorrichtung 12 durch Veränderung des Ultraschall-Wandler-Abstandes abgestimmt wird. Es ist allerdings festzuhalten, dass in diesem Falle die Abstimmung verhältnismässig aufwendig ist. Insbesondere sind die Präzisions-Anforderung an den mechanischen Aufbau beachtlich. Beispielsweise fällt die Kreisgüte des Ultraschallresonators 1 stark ab, wenn die Oberflächen der Ultraschall-Wandler 2, 3 nicht genau parallel justiert sind.

Denkbar ist auch eine Kombination beider Abstimmungsarten des Ultraschall-Resonators, also der mechanischen und der elektrischen Abstimmung. In Fig. 1 ist diese Situation eingezeichnet. Beispielsweise kann

6

die Grobabstimmung mechanisch mit Hilfe des entsprechenden Reglers 16 und der Verschiebe-Vorrichtung 12 vorgenommen werden, während die Feinabstimmung elektrisch mittels des Reglers 6 und des spannungskontrollierten Oszillators 4 bewerkstelligt wird.

Aus dem Ausgangs-Signal des Analysators 5, resp. aus der Regelgrösse, kann auf die Schallgeschwindigkeit und damit auf die Temperatur des Gases im Ultraschallresonator 1 geschlossen werden. Das Ausgangssignal des Analysators 5 wird daher in einem Registriergerät 8 festgehalten.

Temperatur-Variationen im Ultraschallresonator 1 können beispielsweise durch Licht- 17, insbesondere Infrarot-Einstrahlung, erreicht werden. Kleine Temperatur-Schwankungen im Ultraschallresonator 1, welche durch Absorption von intensitäts-modulierter Lichtstrahlung bewirkt werden und demzufolge mit dem Lichtsignal korreliert sind, sind beispielsweise mittels eines Analysators 15 in Form eines Lock-in-Verstärkers messbar. Letzterer verwendet als Referenz das intensitätsmodulierte Signal der Lichtquelle 7. Das Ausgangssignal des Analysators 15 ist der gesuchte Messwert, der über die Lichtabsorption im Ultraschallresonator Auskunft gibt. Dieses Signal wird daher einem Registriergerät 8, beispielsweise in Form eines Schreibers, eines Voltmeters oder eines Rechnereinganges, zugeführt. Das beschriebene Verfahren erlaubt es, Gastemperatur-Aenderungen bis in den Bereich von 10 Grad zu messen. Genauere Angaben sind in den vorgängig erwähnten Artikeln von O. Oehler, J. Wieland und S.Friedrich festgehalten.

Es scheint zunächst wenig sinnvoll, einerseits das Ausgangssignal des Analysators 5 zur weiteren Analyse im Lock-in-Verstärker 15 zu verwenden, andererseits dieses Signal beispielsweise mittels des Reglers 6 auf festem Wert zu halten. Es ist aber naheliegend, mit Hilfe des Reglers 6 langsame Drifterscheinungen zu kompensieren, sodass dem Lockin-Verstärker 15 die Messung der raschen, mit der Lichtquelle synchronen Signale zukommt.

Fig. 2 zeigt eine detaillierte Darstellung einer Vorrichtung zur Messung des photothermischen Effektes. Der Ultraschallresonators 1 wird durch die beiden Ultraschallwandler 2, 3, die einander gegenüber angeordnet sind, gebildet. Das Licht der Quelle 7 gelangt durch ein Fenster 11 in den als Gasküvette ausgebildeten Ultraschallresonator 1. Zum Austausch des gasförmigen Messgutes 20 ist mindestens eine Oeffnung 22, 22' in der Wandung der Gasküvette vorhanden. Gegebenenfalls sind die Oeffnungen mit Strömungswiderständen 23, 23' versehen. Diese Strömungswiderstände können Ventile, Rohrverengungen 23 oder Filterplatten 23', resp. gaspermeable Membranen sein. Es ist festzuhalten, dass diesen Strömungswiderständen 23, 23' keine akustisch dämmende Wirkung zukommen muss - im Gegensatz zu photoakustischen Messungen bei tiefer Frequenz, wo eine gute akustische Abtrennung der Zelle von der Aussenwelt unumgänglich ist. Es muss lediglich erreicht werden, wie bereits erwähnt worden ist, dass sich äussere Temperaturfluktuationen nicht auf den Ultraschallresonator 1 auswirken können. Auf das Lichteintrittsfenster 11 könnte verzichtet werden, falls gewährleistet ist, dass die Oeffnung im Ultraschallresonator keine wesentlichen gaszirkulations-bedingten Temperaturfluktuationen bewirkt.

Zur Verhinderung von unerwünschten Temperaturfluktuationen im Ultraschallresonator 1 ist es empfehlenswert, denselben mit einer mantelförmigen Wärmeisolation 27 zu umgeben und/oder gegebenenfalls mittels einer Heizung 28, einem Heizungssteuergerät 28' und einem Thermosensors 28'' auf konstanter Temperatur zu halten. Ebenso kann es Vorteile bringen, das gasförmige Messgut durch Beheizung der Zuleitungen mittels der Heizelemente 38, 38' auf die Temperatur des Ultraschallresonators zu bringen.

Die Lichtquelle 7 ist intensitätsmoduliert, was beispielsweise durch Ein- und Aus-Schalten des Stromes, oder mittels eines Lichtchoppers 18, der sich im Lichtstrahl 17 zwischen der Lichtquelle 7 und dem Ultraschallresonator 1 befindet, erreicht wird. Zusätzlich kann im Lichtstrahl 17 ein optisches Filter 11' angeordnet sein.

Die Einfügung eines solchen Filters ist vor allem dann angezeigt, wenn die Quelle 7 ein breitbandiges Spektrum aufweist, also wenn beispielsweise die Lichtquelle 7 ein thermischer Strahler ist. In diesem Falle kann ein optisches Bandpass-Filter 11' hinreichend monochromatische Strahlung erzeugen, sodass eine selektive Lichtabsorption durch Gase in der Küvette gewährleistet ist.

Falls die Wellenlänge des im Ultraschallresonator 1 durch das Fenster 11 einfallende Licht in einen spektralen Bereich fällt, wo Gase selektiv absorbieren, kann die in Fig.1 und Fig. 2 dargestellte Vorrichtung zum selektiven Nachweis von Gasen verwendet werden. Die Empfindlichkeit ist zwar nicht derart hoch, wie bei einer auf dem photoakustischen Effekt basierenden Vorrichtung, hingegen weist die besprochene Vorrichtung eine praktisch verschwindende Störanfälligkeit gegenüber Druckfluktuationen und Körperschall auf.

In Fig. 3 ist eine Ausführungsform eines auf einem Ultraschallresonator 1 beruhenden Kalorimeters dargestellt. In Analogie zu der in Fig. 1 gezeigten Vorrichtung, wird die lokale Temperatur eines Gases gemessen. Dasselbe kann die Messprobe selbst sein, oder eine fluidförmige Messprobe umgeben. Im Unterschied zur Vorrichtung von Fig. 1 führt aber nicht die Absorption von Licht zu einer Aenderung der Gastemperatur, sondern das thermische Verhalten des Messgutes, beispielsweise eine chemische Reaktion in einem Gas, einem Aerosol, oder einer Flüssigkeit, das in den Ultraschallresonator 1 gebracht worden ist. Die Kalorimeter-Vorrichtung 30 besteht wiederum aus den beiden Ultraschallwandlern 2, 3, welche, den Ultraschallresonator 1 seitlich begrenzend, einander gegenüber angeordnet sind.

Der als Sender 2 eingesetzte Ultraschallwandler steht mit einem Oszillator 4 in Verbindung und wird von demselben angeregt. Der empfangende Ultraschallwandler 3 gibt sein Ausgangssignal an den Analysator 5 ab, wo dasselbe aufgrund einer Enveloppen- oder Phasen-Analyse ausgewertet wird. Die Abstimmung des Oszillators 4 wird beispielsweise mittels des Reglers 6 nachgestellt. In Bezug auf die Funktionsweise des Temperatrmessverfahrens sei auf die Beschreibung von Fig. 1 hingewiesen.

Für die Genauigkeit dieser Messmethode ist es wesentlich, dass die lokale Temperaturverteilung in der Umgebung des Messgutes 24 nicht durch äussere Einflüsse gestört wird. Das kann einerseits dadurch erreicht werden, dass der Kalorimeterraum weitgehend abgeschlossen ist und damit nicht unter dem Einfluss äusserer Luftströmungen steht. Andererseits ist dafür zu sorgen, dass die Innenwandungen des Kalorimeters eine möglicht konstante und gleichmässige Temperatur aufweisen. Damit können unerwünschte Konvektionsströmungen innerhalb des Kalorimeters verhindert werden. Zu diesem Zweck ist es empfehlenswert, den Ultraschallresonator 1 sowie die Ultraschallwandler 2, 3 mit einer mantelförmigen Wärmeisolation 27 zu umgeben.

Weiter ist es angezeigt, den Ultraschallresonator 1 mit einer thermostatisierten Heizung 28 zu versehen. In Analogie zur Vorrichtung von Fig. 2 regelt dieselbe, 28, mittels des Heizungssteuergeräts 28′ und des Thermosensors 28″ die Temperatur des Ultraschallresonators 1.

Der Ultraschallsender 2 stellt eine massgebende Wärmequelle dar. Um stationäre thermische Verhältnisse zu schaffen ist es daher angebracht, die Ultraschallwandler 2, 3, insbesondere den Sender 2, mit Kühlungen 36, 36′, beispielsweise in Form von Kühlrippen oder Peltier-Elementen, zu versehen.

Da die Impedanz der Ultraschallwandler 2, 3 leicht von der Betriebsfrequenz abhängt - bei Resonanz tritt ein Impedanz-Minimum auf - ist auch die thermische Belastung der Ultraschallwandler 2, 3 bei Veränderung der Betriebsfrequenz leicht variabel. Um eine gleichmässige Temperatur der Ultraschallwandler zu gewährleisten, ist es daher vorteilhaft, die Wandler mittels der Heizelemente 37, 37′ derart zu beheizen, dass die Wärmezufuhr an den Ultraschallwandlern 2, 3 konstant ist. In Analogie zu der Heizung 28 des Ultraschallresonators 1 kann das mittels eines Heizungssteuergerätes und Thermosensoren geschehen.

Das zu untersuchende gasförmige oder flüssige Fluid wird beispielsweise über Ventile 32, 32′ und die Zuleitungen 33, 33′ in das Reaktionsgebiet 31 des Ultraschallresonators 1 eingegeben. Um eine Wärmezufuhr über das Fluid zu verhindern, wird dasselbe gegebenenfalls, beispielsweise mittels der Heizelemente 38, 38′, die an den Zuleitungen 33, 33′ befestigt sind, vorgängig auf die Temperatur, die im Innern des Ultraschallresonators 1 herrscht, gebracht.

Es wurde vorgängig bereits darauf hingewiesen, dass die Eichung des Kalorimeters sehr wichtig ist, da die Temperatur des Messgutes 20 nicht direkt bestimmt wird. Dazu dient beispielsweise ein Heizelement 34, das über ein Speisegerät 34′ betrieben wird.

Es ist festzuhalten, dass kalorimetrische Untersuchung von Gasen und Aerosolen mittels der beschriebenen Vorrichtung eine Ausnahme darstellen dürfte, da die Schallgeschwindigkeit nicht nur von der Gastemperatur, sondern auch wesentlich von der Gasart abhängig ist. Es wird daher nicht nur die Wärmetönung der Gasreaktion, sondern auch die Gaszusammensetzung im Reaktorraum gemessen.

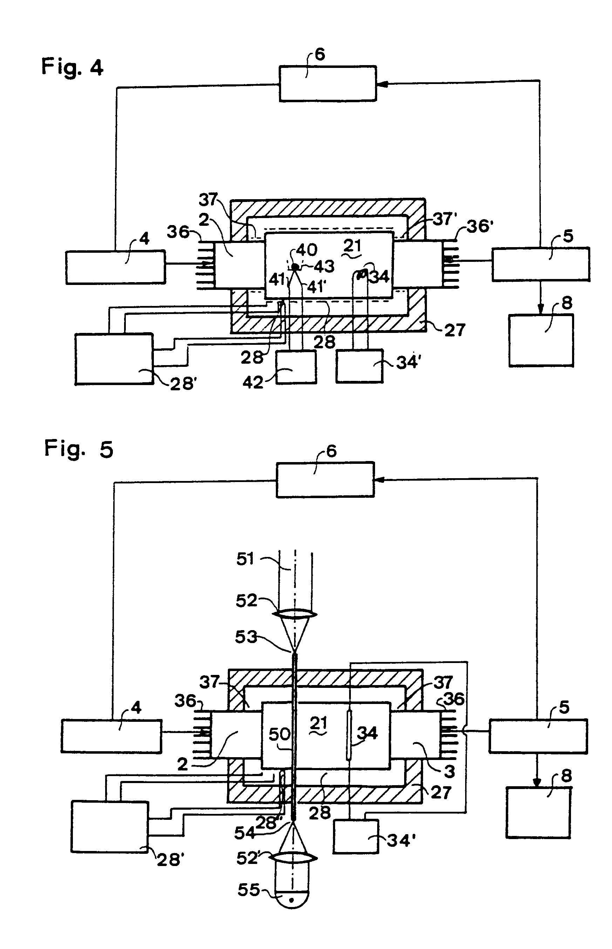

Fig. 4 zeigt eine Kalorimeter-Vorrichtung, die für Untersuchungen an Festkörpern und Flüssigkeiten geeignet ist. Die Vorrichtung hat damit einen ähnlichen Einsatzbereich, wie das erwähnte Differential Scanning Kalorimeter. Im Gegensatz aber zu jenem wird nicht die Temperatur des Messgutes 1 direkt bestimmt, sondern vielmehr diejenige des umgebenden Gases.

Der Aufbau der Vorrichtung ist sehr ähnlich wie derjenige, der im Zusammenhang mit Fig. 3 beschrieben worden ist. Im Gegensatz aber zur vorangehenden Beschreibung wird das Messgut nicht direkt über Zuleitungen 33, 33′ in den Ultraschallresonator eingeleitet, sondern ist mechanisch im Ultraschallresonator 1 fixiert. Gegenüber dem Differential-Kalorimeter muss aber das feste Messgut 40 nicht in einen Tiegel 43 gegeben werden, sondern kann direkt, beispielsweise durch dünne Halterungen 41, 41′, im Ultraschallresonator befestigt sein. Diese Halterungen können beispielsweise elektrische Zuleitungen sein, welche die Reaktion im Messgut 40 auslösen.

Flüssigkeiten können beispielsweise über dünne kapillaren, die gleichzeitig die Funktion der Halterungen 41, 41′ übernehmen, in den Ultraschallresonator 1 eingebracht werden. Das flüssige Messgut kann entweder an den Kapillarspitzen vorhanden sein, oder sich in einem kleinen Tiegel 43 befinden.

Die übrigen Kalorimeterkomponenten, wie das Referenz-Heizelement 34, die Heizungen 28, 37, 37′ des Ultraschallresonators 1, resp. der Ultraschallwandler 2, 3, die Kühlungen 36, 36′ der Ultraschallwandler und der thermisch isolierende Mantel 27 des Kalorimeters, wurden bereits vorgängig beschrieben.

Fig. 5 zeigt eine Darstellung eines Kalorimeters zur Untersuchung von optischen Komponenten. An sich besteht ein grosses Interesse für kalorimetrische Messungen an integriert-optischen und optoelektronischen Komponenten, wie lichtleitenden Fasern, integriert-optischen Lichtemittern, Lichtempfängern, optoelektronischen Lichtschaltern und Verbindungsstellen zwischen optischen Komponenten. Nur anhand thermischer Untersuchungen ist es möglich, die im optischen Material aufgetretene Lichtabsorption von ungewollter Lichtstreuung und Lichtauskopplung zu unterscheiden. Die absorbierte Lichtleistung wird in kalorimetrisch messbare Wärme umgesetzt, während das ungewollt ausgekoppelte Licht kalorimetrisch nicht in Erscheinung tritt. Eine Optimierung der optischen Komponenten erfordert eine genaue Kenntnis der Herkunft der Verluste. Aus diesem Grunde wurden verschiedentlich die optischen Verluste in optischen Materialien und Komponenten, wie etwa Glasfasern, kalorimetrisch gemessen. Beispielsweise wurde, wie bereits erwähnt, der optische Verlust in Glas dadurch bestimmt, dass ein Glasstab in den optischen Resonator eines leistungsstarken Lasers gebracht und die Probentemperaturerhöhung während des Laserbetriebes, sowie die Zeitkonstante der Temperaturerniedrigung nach Ausschalten des Lasers, gemessen wurden (T.C.Rich and D.A. Pinnow, Appl. Phys. Lett. **20**, 264 (1972). Weiter wurde, wie ebenfalls bereits erwähnt, die optische Absorption von Thallium-Halogeniden photoakustisch bestimmt, indem das Messgut in einen verschlossenen Raum gebracht und die durch Lichtabsorption bedingten Druckänderungen mittels eines Mikrophons gemessen wurden (P. Horn, A.Schmid and P.Bräunlich, Jour. Quantum Electr., **QE 19**, 1169 (1983)).

Wie bereits erwähnt, können kalorimetrische Messungen an optischen Komponenten unter Betrieb nicht im Wasser vorgenommen werden. Die wässrige Umgebung würde die Lichtführung, bedingt durch den Brechungsindex des Wassers, wesentlich verändern oder gar verunmöglichen. Es ist daher notwendig, die Messungen in einem Gaskalorimeter vorzunehmen. Bei Verwendung eines herkömmlichen Differential-Kalorimeters ergeben sich bei der Lösung des Problems der Lichteinkopplung und der Schaffung eines guten thermischen Kontaktes zwischen Probe und Festkörper-Temperatursensor grosse technische Schwierigkeiten. An sich könnten Thermoelemente beispielsweise durch Aufdampfen auf dem Messgut angebracht werden, doch wäre der Aufwand beträchtlich.

In der Vorrichtung nach Fig. 5 wird die Einkopplung des Lichtstrahles 51 in das optisch leitende Messgut 50 ausserhalb des Kalorimeterraumes 1 mittels der fokussierenden Optik 52 im Einkopplungsbereich 53 vorgenommen. Das auf der gegenüberliegenden Seite des Ultraschallresonators 1 im Bereich 54 aus dem optischen Element 50 ausgekoppelte Licht wird gegebenenfalls nach einer weiteren Fokussierung mittels der Optik 52′ einem Lichtdetektor 55 zugeführt. Anhand des Signales an diesem Lichtdetektor 55 lässt sich der optische Verlust bestimmen.

Die übrigen Komponenten des Kalorimeters wurden im Zusammenhang mit den Fig. 3, 4, und 5 eingehend beschrieben, sodass darauf nicht mehr eingegangen werden muss.

Die kalorimetrische Messung wird entweder vorgenommen, indem die Gastemperatur in den Umgebung des optisch leitenden Elementes 50 vor und nach Einschalten der optischen Lichteinkopplung gemessen wird, oder indem das Licht alternierend bei sehr tiefer Frequenz in das Messgut 50 eingekoppelt wird.

Bis anhin wurde vorausgesetzt, dass sich Luft im Kalorimeterraum befindet. Es ist aber auch denkbar, dass ein anderes Gas verwendet wird. Insbesondere brächte ein Gas mit guter Wärmeleitfähigkeit, wie etwa Wasserstoff oder Helium, den Vorteil einer kleinen Abkühl-Zeitkonstanten. Damit könnte beispielsweise die Modulationsfrequenz im alternierenden Betrieb des Kalorimeters erhöht werden.

## Patentansprüche

1. Verfahren zur thermischen Untersuchung eines Messgutes in gasförmiger Umgebung, dadurch gekennzeichnet, dass
   - das Messgut im Gasraum eines Ultraschallresonators angeordnet ist,
   - der Ultraschallresonator durch zwei einander gegenüberliegende Ultraschallwandler, wobei der eine als Sender, der andere als Empfänger betrieben, gebildet wird und
   - die vom Messgut an die gasförmige Umgebung abgegebene, resp. durch das Messgut von der gasförmigen Umgebung aufgenommene Wärme über die temperaturabhängige Aenderung der Abstimmung des Ultraschallresonators gemessen wird.

2. Verfahren nach Anspruch 1, dadurch gekennzeichnet, dass die Aenderung der Abstimmung des Ultraschallresonators aufgrund der Amplituden-Veränderung des in einer Flanke einer Resonanz betriebenen, oder aufgrund der Phasen-Veränderung zwischen ausgesendetem und empfangenen Ultraschallsignal des in Resonanznähe betriebenen Ultraschallresonators, gemessen wird.

3. Verfahren nach Anspruch 2, dadurch gekennzeichnet, daß Regelmittel vorhanden sind, welche die Abstimmung des Ultraschallresonators kontrollieren.

4. Verfahren nach Anspruch 2, dadurch gekennzeichnet, dass intensitätsmoduliertes und gegebenenfalls monochromatisches Licht auf das Messgut im Ultraschallresonator gestrahlt wird.

5. Verfahren nach Anspruch 4, dadurch gekennzeichnet, dass Mittel vorhanden sind, welche den Austausch des gasförmigen Messgutes erlauben.

6. Verfahren nach Anspruch 5, dadurch gekennzeichnet, dass das Messgut gasförmig ist und durch Einstrahlung von Licht in den Ultraschallresonator eine photothermische Gasanalyse durchgeführt wird.

7. Verfahren nach einem der Ansprüche 1 bis 3, dadurch gekennzeichnet, dass das Messgut kalorimetrisch untersucht wird.

8. Verfahren nach Anspruch 7, dadurch gekennzeichnet, dass eine zusätzliche Wärmequelle im Ultraschallresonator als Wärmereferenz herangezogen wird.

9. Verfahren nach einem der Ansprüche 7 oder 8, dadurch gekennzeichnet, dass das Messgut ein gasförmiges oder flüssiges Fluid oder ein Fluidgemisch ist und das Fluid oder dessen Komponenten vor oder während der kalorimetrischen Messung über mindestens eine Zuleitung in den Ultraschallresonator gebracht werden.

10. Verfahren nach einem der Ansprüche 7 oder 8, dadurch gekennzeichnet, dass das Messgut ein Festkörper ist und im Ultraschallresonator angebracht ist.

11. Verfahren nach Anspruch 7, dadurch gekennzeichnet, dass das Messgut während der kalorimetrischen Untersuchung kontinuierlich oder alternierend von aussen mit Energie versorgt wird.

12. Verfahren nach Anspruch 11 dadurch gekennzeichnet, dass das Messgut ein lichtleitendes Element ist und mit Energie in Form von Licht versorgt werden kann.

13. Verfahren nach Anspruch 11, dadurch gekennzeichnet, dass das Messgut eine nicht verschwindende elektrische Leitfähigkeit besitzt und mit elektrischer Energie versorgt werden kann.

14. Vorrichtung zur thermischen Untersuchung eines Messgutes (20, 50) in gasförmiger Umgebung, bestehend aus einem abgetrennten Raum, dem sog. Kalorimeterraum (21), und Temperaturmessmitteln zur Bestimmung der vom Messgut (20, 50) an das umgebende Gas abgegebene, resp. vom Messgut durch das umgebende Gas aufgenommene, Wärme,
    - wobei die Temperaturmessmittel zwei an der Berandung des Kalorimeterraumes (21) einander gegenüber angeordnete Ultraschallwandler (2,3) sind, und
    - der eine (2), als Sender betrieben, mit einem Oszillator (4) und der andere (3), als Empfänger betrieben, mit einem Analysator (5) verbunden ist,
    dadurch gekennzeichnet, dass
    - die Ultraschallwandler (2,3) in derartigem Abstand angeordnet sind, dass sie einen Ultraschallresonator (1) bilden und
    - Mittel (6,12,16) zur Messung der Abstimmung des Ultraschallresonators (1) vorhanden sind.

15. Vorrichtung nach Anspruch 14, dadurch gekennzeichnet, dass zur Messung der Abstimmung des Ultraschallresonators (1) der Ultraschallempfänger (3) mit einem Analysator (5) verbunden ist, der Amplituden-Veränderung des Ultraschallsignales, oder Phasen-Veränderung bezüglich des am Ultraschallsender (2) angelegten Signales aufnimmt.

16. Vorrichtung nach Anspruch 14 oder 15, dadurch gekennzeichnet, dass der Analysator (5) über einen ersten Regler (6) mit dem Oszillator (4) verbunden ist und/oder über einen zweiten Regler (16) mit der mechanischen Verschiebevorrichtung (12) zur Verschiebung eines der beiden Ultraschallwandler (2, 3) in Verbindung steht.

17. Vorrichtung nach einem der Ansprüche 14 bis 16, dadurch gekennzeichnet, dass der Kalorimeterraum (21) mit einer gegebenenfalls fensterbedeckten (11) Oeffnung versehen ist und Mittel (22, 22′, 23, 23′) zum Austausch des Gases vorhanden sind.

18. Vorrichtung nach Anspruch 17, dadurch gekennzeichnet, dass ein Schaltelement zum Ein- und Aus-Schalten des Stromes einer Lichtquelle (7) vorhanden ist, oder sich im Lichtstrahl (17) zwischen der Lichtquelle (7) und dem Ultraschallresonator (1) ein Lichtchopper (18) befindet und/oder im Lichtstrahl (17) ein optisches Filter (11′) angeordnet ist.

19. Vorrichtung nach Anspruch 18, dadurch gekennzeichnet, dass in der Wandung des Kalorimeterraumes (21) mindestens eine Oeffnung (22, 22′) vorhanden ist und diese Oeffnungen gegebenenfalls mit Strömungswiderständen (23, 23′) in Form von Ventilen, Rohrverengungen (23) oder Filterplatten (23′) versehen sind.

20. Vorrichtung nach einem der Ansprüche 14 bis 16, dadurch gekennzeichnet, dass Mittel (34, 34′, 41, 41′, 52, 52′) vorhanden sind, welche es erlauben, Energie in den Resonatorraum (21) ein- oder auszukoppeln.

21. Vorrichtung nach Anspruch 20, dadurch gekennzeichnet, dass im Kalorimeterraum (21 ) zwischen den Ultraschallwandlern (2,3) zusätzlich ein Referenzheizelement (34) angebracht ist, das seinerseits mit einem Speisegerät (34′) verbunden ist.

22. Vorrichtung nach einem der Ansprüche 20 oder 21, dadurch gekennzeichnet, dass mindestens eine Zuleitung (33, 33′) vorhanden ist, die das Messgut in Form eines gasförmigen oder flüssigen Fluids oder dessen Komponenten in den Kalorimeterraum (21 ) einzuführen gestattet.

23. Vorrichtung nach einem der Ansprüche 20 oder 21, dadurch gekennzeichnet, dass mindestens eine Halterung (41, 41′) vorhanden ist, die das Messgut in Form eines Festkörpers oder einer eingeschlossenen Flüssigkeit im Kalorimeterraum (21) fixiert.

24. Vorrichtung nach Anspruch 23 dadurch gekennzeichnet, dass mindestens eine Fokussieroptik (52, 52′) vorhanden ist, welche gestattet, Licht in das Messgut in Form eines lichtleitenden Elementes (50) einzukoppeln und gegebenenfalls auszukoppeln.

25. Vorrichtung nach den Ansprüchen 14 bis 24, dadurch gekennzeichnet, dass Mittel vorhanden sind, bestehend aus einem Heizelement (28), einem Heizungssteuergerät (28′) und einem Thermosensor (28″), die es gestatten, die Berandungen des Kalorimeterraumes (21) auf konstanter Temperatur zu halten, oder dessen Temperatur in vorgeschriebener Weise zu ändern.

26. Vorrichtung nach den Ansprüchen 14 bis 24 dadurch gekennzeichnet, dass Mittel vorhanden sind, bestehend aus Heizelementen (37, 37′), einem Heizungssteuergerät und Thermosensoren und gegebenenfalls Kühlungen (36, 36′), die es gestatten, mindestens einen der Ultraschallwandler (2, 3) auf konstanter Temperatur zu halten, oder dessen Temperatur in vorgeschriebener Weise zu ändern.

27. Verwendung der Vorrichtung nach einem der Ansprüche 14 bis 19 zur selektiven Detektion von Gasen.

28. Verwendung der Vorrichtung nach einem der Ansprüche 14 bis 16 und 19 zur kalorimetrischen Untersuchung von Lichtleitern.

## Claims

1. Process for the thermal investigation of a measuring material in a gaseous environment, characterized in that
   - the measuring material is placed in the gaseous cavity of an ultrasonic resonator,
   - the ultrasonic resonator is composed of two facing ultrasonic transducers, one being operated as a transmitter and the other as a receiver, and
   - the heat given off by the measuring material to the gaseous environment or absorbed by the measuring material from the gaseous environment is measured via the temperature-dependent change of the tuning of the ultrasonic resonator.

2. Process according to claim 1, characterized in that the change of the tuning of the ultrasonic resonator is measured on the basis of the amplitude change of the ultrasonic resonator operated in one flank of a resonance or on the basis of the phase change between emitted and received ultrasonic signals in the ultrasonic resonator operated close to resonance.

3. Process according to claim 2, characterized in that regulating means are provided for controlling the tuning of the ultrasonic resonator.

4. Process according to claim 2, characterized in that intensity-modulated and optionally monochromatic light is irradiated onto the measuring material inside of the ultrasonic resonator.

5. Process according to claim 4, characterized in that means are provided which permit the exchange of the gaseous measuring material.

6. Process according to claim 5, characterized in that the measuring material is gaseous and a photothermal gas analysis is performed by radiating light into the ultrasonic resonator.

7. Process according to one of the claims 1 to 3, characterized in that the measuring material is calorimetrically investigated.

8. Process according to claim 7, characterized in that an additional heat source is used in the ultrasonic resonator as a heat reference.

9. Process according to one of the claims 7 or 8, characterized in that the measuring material is a gaseous or liquid fluid or a fluid mixture and the fluid or its components are brought by means of at least one feed line into the ultrasonic resonator before or during the calorimetric measurement.

10. Process according to one of the claims 7 or 8, characterized in that the measuring material is a solid and is fixed in the ultrasonic resonator.

11. Process according to claim 7, characterized in that during the calorimetric investigation, the measuring material is continuously or alternately supplied with energy from the outside.

12. Process according to claim 11, characterized in that the measuring material is a light-conducting element and can be supplied with energy in the form of light.

13. Process according to claim 11, characterized in that the measuring material has a non-disappearing electrical conductivity and can be supplied with electrical energy.

14. Apparatus for the thermal investigation of a measuring material (20, 50) in a gaseous environment, comprising a separate chamber, the so-called calorimeter chamber (21), and temperature measuring means for determining the heat given off by the measuring material (20, 50) to the surrounding gas, or absorbed by the measuring material from the surrounding gas, whereby
- the temperature measuring means are two facing ultrasonic transducers (2, 3) located on the edge of the calorimeter chamber (21), and
- one of them (2) being operated as a transmitter is connected to an oscillator (4), whilst the other (3), is operated as a receiver and connected to an analyser (5),
characterized in that
- the ultrasonic transducers (2, 3) are spaced in such a way that they form an acoustic resonator, and
- there are means (6, 12, 16) for measuring the tuning of the ultrasonic resonator.

15. Apparatus according to claim 14, characterized in that the ultrasonic receiver (3) is connected to an analyser (5), which records the amplitude change of the ultrasonic signal or the phase change with respect to the signal applied to the ultrasonic transmitter (2) in order to measure the tuning of the ultrasonic resonator (1).

16. Apparatus according to claims 14 or 15, characterized in that the analyser (5) is connected via a first regulator (6) to the oscillator (4) and/or via a second regulator (16) to the mechanical shifting device (12) for shifting one of the two ultrasonic transducers (2,3).

17. Apparatus according to one of the claims 14 to 16, characterized in that the calorimeter chamber (21) is provided with an optionally window-covered (11) opening and means (22, 22', 23, 23') are provided for gas exchange purposes.

18. Apparatus according to claim 17, characterized in that a switching device is provided for switching on and off the current for a light source (7), or a light chopper (18) is located in the light-beam (17) between the light source (7) and the ultrasonic resonator (1) and/or an optical filter (11′) is located in the light beam (17).

19. Apparatus according to claim 18, characterized in that there is at least one opening (22, 22′) in the wall of the calorimeter chamber (21) and said openings are optionally provided with flow resistances (23, 23′) in the form of valves, pipe constrictions (23) or filter plates (23′).

20. Apparatus according to one of the claims 14 to 16, characterized in that means (34, 34′, 41, 41′, 52, 52′) are provided, which make it possible to couple energy into or out of the resonator chamber (21).

21. Apparatus according to claim 20, characterized in that the calorimeter chamber (21) between the ultrasonic transducers (2, 3) additionally contains a reference heating element (34), which is connected to a feed device (34′).

22. Apparatus according to one of the claims 20 or 21, characterized in that there is at least one feed line (33, 33′), which is able to introduce into the calorimeter chamber (21) the measuring material in the form of a gaseous or liquid fluid or components thereof.

23. Apparatus according to one of the claims 20 or 21, characterized in that at least one holding support (41,41′) is provided for fixing the measuring material in the form of a solid or an enclosed liquid in the calorimeter chamber (21).

24. Apparatus according to claim 23, characterized in that there is at least one focussing optics (52,52′) making it possible to couple in and optionally out light into the measuring material in the form of a light-conducting element (50).

25. Apparatus according to claims 14 to 24, characterized in that means are provided, which comprise a heating element (28), a heating control device (28′) and a temperature sensor (28″), which make it possible to keep the edges of the calorimeter container at a constant temperature, or to change said temperature in a prescribed way.

26. Apparatus according to claims 14 to 24, characterized in that means are provided, which comprise the heating elements (37, 37′), a heating control device and temperature sensors and optionally cooling means (36, 36′), which make it possible to keep at least one of the ultrasonic transducers (2, 3) at a constant temperature, or to change its temperature in a prescribed way.

27. Use of the apparatus according to one of the claims 14 to 19 for the selective detection of gases.

28. Use of the apparatus according to one of the claims 14 to 19 for the calorimetric investigation of light guides.

## Revendications

1. Procédé pour analyser thermiquement un matériau de mesure dans une atmosphère gazeuse, caractérisé en ce que
   - le matériau de mesure est placé dans la chambre à gaz d'un résonateur à ultrason,
   - le résonateur à ultrason est composé par deux transformateurs d'ultrason, placés l'un en face de l'autre, l'un travaillant comme émetteur, l'autre comme récepteur, et
   - la quantité de chaleur cédée du matériau de mesure à l'atmosphère gazeuse, respectivement reçue de l'atmosphère gazeuse par le matériau de mesure, est mesurée à l'aide de la variation de l'accord du résonateur à ultrason.

2. Procédé selon la revendication 1, caractérisé en ce que la variation de l'accord du résonateur à ultrason est mesurée ou bien à l'aide du changement de l'amplitude du résonateur à ultrason travaillant dans un flanc de la résonance, ou bien à l'aide du changement de phase entre le signal ultrasonique émis et capté du résonateur à ultrason travaillant en proximité de la résonance.

3. Procédé selon la revendication 2, caractérisé en ce qu'ils existent des moyens de réglage qui controllent l'accord du résonateur à ultrason.

4. Procédé selon la revendication 2, caractérisé en ce que le matériau de mesure, placé dans le résonateur à ultrason est sousmis à un rayonnement de lumière modulée en intensité et au besoin monochromatique.

5. Procédé selon la revendication 4, caractérisé en ce qu'ils existent des moyens pour échanger le matériau de mesure gazeux.

6. Procédé selon la revendication 5, caractérisé en ce que le matériau de mesure se présente sous forme gazeuse et qu'en faisant entrer un rayonnement de lumière dans le résonateur à ultrason une analyse photothermique de gaz est effectuée.

7. Procédé selon l'une des revendications 1 à 3, caractérisé en ce que le matériau de mesure est analysé de façon calorimétrique.

8. Procédé selon la revendication 7, caractérisé en ce qu'on utilise une source de chaleur supplémentaire dans le résonateur à ultrason comme référence de chaleur.

9. Procédé selon l'une des revendications 7 ou 8, caractérisé en ce que le matériau de mesure est un fluide liquide ou gazeux ou un mélange de fluides et que le fluide ou ses composants sont conduits avant ou pendant la mesure calorimétrique dans le résonateur à ultrason par au moins une conduite d'amené.

10. Procédé selon l'une des revendications 7 ou 8, caractérisé en ce que le matériau de mesure est un corps solide placé dans le résonateur à ultrason.

11. Procédé selon la revendication 7, caractérisé en ce que le matériau de mesure est alimenté de l'extérieur de manière continuelle ou alternante avec de l'énergie pendant l'analyse calorimétrique.

12. Procédé selon la revendication 11, caractérisé en ce que le matériau de mesure est un élément apte à conduire la lumière, qui peut être alimenté avec de l'énergie sous forme de lumière.

13. Procédé selon la revendication 11, caractérisé en ce que le matériau de mesure possède une conductibilité électrique supérieure à zéro et peut être alimenté avec de l'énergie électrique.

14. Dispositif qui sert à analyser de façon thermique un matériau de mesure (20,50) placé dans une atmosphère gazeuse et qui est composé par une chambre séparée, appelée chambre calorimétrique (21), et par des moyens pour mesurer la température qui sert à déterminer la quantité de chaleur cédée du matériau de mesure (20,50) au gaz ambiant, respectivement reçue par le matériau de mesure du gaz ambiant, où
   - les moyens pour mesurer la température sont constitués par deux transformateurs d'ultrason (2,3), placés l'un en face de l'autre sur la paroi de la chambre calorimétrique (21), et
   - l'un (2) des deux transformateurs d'ultrason travaille comme émetteur, étant relié à un oscillateur, et l'autre (3) comme récepteur, étant relié à un analyseur (5),
   caractérisé en ce que
   - les transformateurs d'ultrason (2,3) sont placés à une distance telle qu'ils constituent un résonateur à ultrason (1) et
   - qu'ils existent des moyens (6,12,16) pour mesurer l'accord du résonateur à ultrason.

15. Dispositif selon la revendication 14, caractérisé en ce que pour mesurer l'accord du résonateur à ultrason (1) le récepteur d'ultrason (3) est relié à un analyseur (5), qui détecte le changement de l'amplitude du signal ultrasonique, ou le changement de phase par rapport au signal transmis à l'émetteur d'ultrason (2).

16. Dispositif selon la revendication 14 ou 15, caractérisé en ce que l'analyseur (5) est relié par un premier élément de réglage (6) à l'oscillateur (4) et/ou par un deuxième élément de réglage à un dispositif mécanique (12) servant à déplacer l'un des deux transformateurs d'ultrason.

17. Dispositif selon l'une des revendications 14 à 16, caractérisé en ce que la chambre calorimétrique (21) possède une ouverture, couverte au besoin par une fenêtre (11) et qu'ils existent des moyens (22,22′,23,23′) pour échanger le gaz.

18. Dispositif selon la revendication 17, caractérisé en ce qu'il existe un élément interrupteur servant à brancher et à débrancher le courant d'une source de lumière (7), ou qu'un hâcheur de lumière (18) se trouve dans le rayon lumineux (17) entre la source de lumière (7) et le résonateur à ultrason (1) et/ou qu'il se trouve un filtre optique (11') dans le rayon lumineux (17).

19. Dispositif selon la revendication 18, caractérisé en ce qu'il existe au moins une ouverture (22,22') dans la paroi de la chambre calorimétrique (2) et que ces ouvertures sont au besoin munies de résistances de flux (23,23') sous forme de clapets, de rétricissements de tuyeau (23) ou de plaques de filtre (23').

20. Dispositif selon l'une des revendications 14 à 16, caractérisé en ce qu'ils existent des moyens (34,34',41,41',52,52'), qui permettent de faire entrer ou sortir de l'énergie dans la chambre du résonateur (21).

21. Dispositif selon la revendication 20, caractérisé en ce que en outre un élément de chauffage de référence (34) est placé entre les transformateurs d'ultrason (2,3) dans la chambre calorimétrique (21), cet élément étant relié à un appareil d'alimentation (34').

22. Dispositif selon l'une des revendications 20 ou 21, caractérisé en ce qu'il existe ou moins une conduite d'amené (33,33') qui permet d'amener le matériau de mesure , sous forme d'un fluide gazeux ou liquide ou ses composants dans la chambre calorimétrique (21).

23. Dispositif selon l'une des revendications 20 ou 21, caractérisé en ce qu'il existe au moins un élément de fixation (41,41'), qui fixe la matériau de mesure, sous forme d'un corps solide ou d'un liquide enfermé, dans la chambre calorimétrique (21).

24. Dispositif selon la revendication 23, caractérisé en ce qu'il existe au moins un dispositif optique de focalisation (52,52') qui permet de coupler et au besoin de découpler de la lumière dans le matériau de mesure sous forme d'un élément (50) apte à conduire la lumière.

25. Dispositif selon les revendications 14 à 24, caractérisé en ce qu'ils existent des moyens, composés par un élément de chauffage (28), un appareil de contrôle de chauffage (28') et d'un capteur thermique (28''), qui permettent de maintenir la paroi de la chambre calorimétrique (21) à une température constante ou de changer celle-ci d'une façon donnée.

26. Dispositif selon les revendications 14 à 24, caractérisé en ce qu'ils existent des moyens, composés par des éléments de chauffage (37,37'), un appareil de contrôle de chauffage et de capteurs thermiques et au besoin d'éléments de refroidissements (36,36') qui permettent de maintenir au moins un transformateur d'ultrason (2,3) à une température constante ou de changer la température de celui-ci d'une façon donnée.

27. Application du dispositif selon l'une des revendications 14 à 19 pour la détection sélective de gaz.

28. Application du dispositif selon l'une des revendications 14 à 16 et 19 pour l'analyse calorimétrique des conducteurs de lumière.

Fig.1

Fig. 2

Fig. 3

Fig. 4

Fig. 5